# EUROPÄISCHE PATENTSCHRIFT

(11) **EP 1 390 419 B1**
(45) Veröffentlichungstag und Bekanntmachung des Hinweises auf die Patenterteilung: **18.08.2010**
(21) Anmeldenummer: 02742985.1
(22) Anmeldetag: 10.05.2002
(51) Int. Cl.: C08G 18/38, C04B 28/26, C04B 24/12, C09K 17/46

(54) **ORGANOMINERALSYSTEM ERHÄLTLICH DURCH UMSETZUNG VON POLYISOCYANATEN MIT WASSERGLAS IN GEGENWART VON AMINOSILANEN**
ORGANO-MINERAL SYSTEM OBTAINED BY REACTION OF POLYISOCYANATES WITH WATER GLASS IN THE PRESENCE OF AMINOSILANES
SYSTEME ORGANO-MINERAL OBTENU PAR REACTION DE POLYISOCYANATES AVEC DU VERRE SOLUBLE, EN PRESENCE D'AMINOSILANES

(30) Priorität: 19.05.2001 DE 10124466
(43) Veröffentlichungstag der Anmeldung: 25.02.2004
(73) Patentinhaber: Minova International Limited, Park Road, Holmewood Industrial Estate Chesterfield Derbyshire S42 5UY (GB)
(72) Erfinder: CORNELY, Wolfgang, 45966 Gladbeck (DE); SAMEK, Petra, 41516 Grevenbroich (DE); CZYSOLLEK, Oliver, 45309 Essen (DE); FISCHER, Martin, 46119 Oberhausen (DE)
(74) Vertreter: Peel, James Peter
(86) Internationale Anmeldenummer: PCT/EP2002/005164
(87) Internationale Veröffentlichungsnummer: WO 2002/094903

(56) Entgegenhaltungen:
- EP-A- 0 329 187
- WO-A-93/21249
- DE-A- 19 728 252
- DATABASE WPI Section Ch, Week 199250 Derwent Publications Ltd., London, GB; Class A25, AN 1992-399268 XP002079693 & JP 04 309616 A (DAIICHI KOGYO SEIYAKU CO LTD), 2. November 1992 (1992-11-02)

## Beschreibung

Die Erfindung betrifft ein Organomineralsystem, das durch Umsetzung einer Polyisocyanatkomponente mit einer Wasserglaskomponente erhalten wird. Derartige Organomineralsysteme werden im wesentlichen im Bergbau und auch in der Bauindustrie angewendet. Sie sind schwerer entflammbar als die bekannten Polyurethan- und Polyesterharzsysteme.

Aus der DE 197 28 252 A1 ist ein Organomineralsystem bekannt, das als schnellfestes, über Kopf anwendbares Ankerverfestigungssystem eingesetzt werden kann. Das Organomineralsystem kann mit einer Zweikomponenten-Verarbeitungsanlage über Kopf in ein Bohrloch injiziert werden, ohne dass das Material wieder zurückfließt. Zur Erzielung dieser Eigenschaften werden der Wasserglaskomponente primäre und/oder sekundäre, di- und/oder trifunktionelle Polyoxyalkylenamine zugesetzt. Durch diesen Zusatz erhält man nach Umsetzung mit der Polyisocyanatkomponente innerhalb von ca. 2 Minuten ein puddingartiges Produkt, in das ein Anker eingesetzt werden kann. Anschließend härtet das Produkt aus.

Bei dem Zusatz von Polyoxyalkylenaminen zu dem Wasserglas ist es von Nachteil, dass die Polyoxyalkylenamine mit dem Wasserglas keine homogene Phase bilden. Unmittelbar nach Herstellung einer Dispersion ist eine Phasentrennung zu beobachten. Derartige Organomineralsysteme können somit vor Ort nur nach aufwendiger Vermischung unmittelbar vor der Verarbeitung eingesetzt werden.

Der Erfindung liegt die Aufgabe zugrunde, ein Organomineralsystem bereit zu stellen, das eine homogene Wasserglaskomponente aufweist, aus der sich unmittelbar nach Mischen mit der Polyisocyanatkomponente ein pastöses Produkt bildet, das anschließend aushärtet.

Diese Aufgabe wird im Hinblick auf das Organomineralsystem durch die Merkmale des Anspruchs 1 und im Hinblick auf das Verfahren durch die Merkmale des Anspruchs 6 gelöst.

Weiterbildungen erfolgen gemäß den Merkmalen der Unteransprüche.

Gemäß der Erfindung werden Aminoderivate von Trialkoxysilanen verwendet, die bei Vermischen mit Wasser unter Zersetzung de Etherbindung zu den entsprechenden Silanolen hydrolysieren. Es ist auch möglich, die Trialkoxysilane direkt in die Wasserglaskomponente zu geben.

Bei dem erfindungsgemäßen Organomineralsystem ist es von Vorteil, dass die Silanverbindungen in der Wasserglaskomponente löslich sind. Dadurch wird eine homogene Wasserglaskomponente erhalten, die sich auch beim Transport und der Lagerung nicht entmischt.

Unmittelbar nach dem Vermischen der Wasserglaskomponente mit der Polyisocyanat-Komponente reagiert das Organomineralsystem zu einem pastösen Produkt, das anschließend aushärtet. Diese Eigenschaft hat für viele Anwendungsfälle Vorteile. So kann das Organomineralsystem über Kopf in ein Bohrloch injiziert werden, ohne dass das Material wieder zurückfließt.

Das erfindungsgemäße Organomineralsystem eignet sich auch hervorragend für die Spritzbeschichtung mit Harzen zum Schutz von Bauwerken, da das Harz bei der Beschichtung von nicht horizontalen Oberflächen nicht nach unten abfließt oder abtropft, sondern hinreichend pastös ist.

Eine andere Anwendungsmöglichkeit des erfindungsgemäßen Organomineralsystems ist der Einsatz als Reparaturmörtel zur Ausbesserung von Fehlstellen. Das Organomineralsystem kann auch von ferngesteuerten Robotern, z.B. bei der Sanierung nicht begehbarer Rohrleitungen, eingesetzt werden.

Eine Zugabe von Katalysatoren ist nicht unbedingt erforderlich, da die erfindungsgemäßen Aminosilanole auch eine katalytische Wirkung haben. Es ist jedoch möglich, die in der Polyurethan-Chemie üblichen Katalysatoren zuzusetzen.

Die Zugabe weiterer, aus der Polyurethan-Chemie bekannter Stoffe ist möglich.

Die Erfindung wird nachfolgend anhand von Beispielen erläutert.

### Beispiel 1 (Löslichkeitsversuche)

Ein handelsübliches Natriumwasserglas mit 12,0 % Na₂O und 31,3 % SiO₂ (Wasserglas 1) wurde bei 25°C mit verschiedenen Diaminen in verschiedenen Konzentrationen versetzt. Dabei wurden folgende Diamine verwendet:

| | |
|---|---|
| DETDA | Isomerengemisch aus 3,5-Diethyltoluol(2,4)diamin und 3,5-Diethyltoluol(2,6)diamin |
| DETA | Diethylentriamin (bis(2-aminoethyl)amin) |
| PACM | Di(4-aminocyclohexyl)methan |
| Jeffamin T 403 | Propoxyliertes Trimethylolpropan mit drei primären Aminoendgruppen und einem durchschnittlichen Molekulargewicht von 440 u |
| DIAMO-Silanol | (3-(Ethylendiamino)propyl)silanol |
| TRIAMO-Silanol | (3-(Diethylentriamino)propyl)silanol |

"Löslich" bedeutet völlige Löslichkeit der beiden Komponenten, "nicht löslich" das Aufschwimmen einer organischen Phase auf der Wasserglas-Phase.

| **Diamin** | **Löslichkeit** **bei 1 % Zusatz** | **Löslichkeit** **bei 5 % Zusatz** |
|---|---|---|
| DETDA | Nicht löslich | Nicht löslich |
| DETA | Nicht löslich | Nicht löslich |
| PACM | Nicht löslich | Nicht löslich |
| Jeffamin T 403 | Nicht löslich | Nicht löslich |
| DIAMO-Silanol | Löslich | Löslich |
| TRIAMO-Silanol | Löslich | Löslich |

Aus den Versuchen, ergibt sich, dass nur die erfindungsgemäßen Silanole in der Wasserglaskomponente löslich sind.

### Beispiel 2a

Eine Mischung von 430 g der Komponente A, bestehend aus
95,1 % Wasserglas 1
2,5 % Ethylenglykol
1,2 % (3-(Diethylentriamino)propyl)trimethoxysilan
1,2 % Wasser
und 340 g der Komponente B, bestehend aus
66,5 % Roh-MDI, (polymeres Diphenylmethandiisocyanat mit einer Viskosität (25°C) von 200 mPa s)
13,5 % Polypropylenglykol mit dem durchschnittlichen Molekulargewicht 2000 u 20,0 % Dibutylphthalat
wird über eine Zweikomponentenkartusche und Statikmischer in ein Glasrohr von 50 mm Durchmesser und 300 mm Länge gefüllt. Die Mischung fließt aus dem senkrechten, nach unten offenen Rohr nicht aus.

### Beispiel 2b (Vergleichsbeispiel)

Eine Mischung von 430 g der Komponente A, bestehend aus
95,1 % Wasserglas 1
2,5 % Ethylenglykol
1,2 % (3-Aminopropyl)triethoxysilan
1,2 % Wasser
und 340 g der Komponente B, bestehend aus
66,5 % Roh-MDI (polymeres Diphenylmethandiisocyanat mit einer Viskosität (25°C) von 200 mPa s)
13,5 % Polypropylenglykol mit einem Molekulargewicht von 2000
20,0 % Dibutylphthalat
wird über eine Zweikomponentenkartusche und Statikmischer in ein Glasrohr von 50 mm Durchmesser und 300 mm Länge gefüllt. Die Mischung fließt aus dem senkrechten, nach unten offenen Rohr aus.

### Beispiel 3 (Verkleben einer Ankerstange)

Eine Mischung gemäß Beispiel 2a wurde mittels 2-K-Pumpe und Statikmischer bei einer Produkttemperatur von 30°C in ein Bohrloch gemäß DIN 21521 von 50 mm Durchmesser, 2,10 m Länge eingebracht. Das Bohrloch war senkrecht über Kopf angeordnet. Das Harz floss nicht aus dem Bohrloch aus. Anschließend wurde ein GEWI-Anker von 2,20 m Länge in das Bohrloch eingeführt. Nach 4 h wurde eine Zugversuch mit der effektiven Verbundlänge von 0,6 m durchgeführt. Bei einer Zugkraft von 360 kN wurde der Anker aus dem Bohrloch gezogen. Das erfindungsgemäße Organomineralsystem erfüllt somit die Anforderungen für das Verkleben einer Ankerstange.

## Patentansprüche

1. Organomineralsysteme, erhalten durch Umsetzung einer Polyisocyanatkomponente mit einer Wasserglaskomponente, **dadurch gekennzeichnet, dass** die Wasserglaskomponente Silanverbindungen enthält, die mindestens zwei primäre und/oder sekundäre Aminogruppen aufweisen.

2. Organomineralsysteme nach Anspruch 1, **dadurch gekennzeichnet, dass** die Wasserglaskomponente Silanole oder deren Vorläuferverbindungen enthält.

3. Organomineralsysteme nach Anspruch 1 und 2, **dadurch gekennzeichnet, dass** die Wasserglaskomponenten (3-(Ethylendiamino)propyl)silanol oder (3-(Diethylentriamino)propyl)silanol enthält.

4. Organomineralsystem nach Anspruch 1 bis 3, **dadurch gekennzeichnet, dass** die Wasserglaskomponente (3-(Ethylendiamino)propyl)trimethoxysilan oder (3-(Diethylentriamino)propyl)trimethoxysilan als Vorläuferverbindung enthält.

5. Organomineralsystem nach Anspruch 1 bis 4, **dadurch gekennzeichnet, dass** die Wasserglaskomponente Silanverbindungen in einer Menge von 0,05 - 5 Gew.-% enthält.

6. Verfahren zur Herstellung eines Organomineralsystems durch Umsetzung einer Polyisocyanat-Komponente mit einer Wasserglaskomponente, **dadurch gekennzeichnet, dass** der Wasserglaskomponente Silanverbindungen zugesetzt werden.

7. Verwendung des Organomineralsystems nach Anspruch 1 zum Verfüllen von Bohrlöchern und/oder zum Einkleben von Ankern.

8. Verwendung des Organomineralsystems nach Anspruch 1 als Spritzbeschichtung für Bauwerksoberflächen.

9. Verwendung des Organomineralsystems nach Anspruch 1 als Reparaturmörtel zum Ausbessern von Fehlstellen.

## Claims

1. Organomineral systems, obtained by reaction of a polyisocyanate component with a water glass component, **characterised in that** the water glass component contains silane compounds which have at least two primary and/or secondary amino groups.

2. Organomineral systems according to claim 1, **characterised in that** the water glass component contains silanols or precursor compounds thereof.

3. Organomineral systems according to claim 1 and 2, **characterised in that** the water glass component contains (3-(ethylenediamino)propyl)silanol or (3-(diethylenetriamino)propyl)silanol.

4. Organomineral system according to claim 1 to 3, **characterised in that** the water glass component contains (3-(ethylenediamino)propyl)trimethoxysilane or (3-(diethylenetriamino)propyl)trimethoxysilane as precursor compound.

5. Organomineral system according to claim 1 to 4, **characterised in that** the water glass component contains silane compounds in an amount of from 0.05 to 5 wt.%.

6. Process for the preparation of an organomineral system by reaction of a polyisocyanate component with a water glass component, **characterised in that** silane compounds are added to the water glass component.

7. Use of the organomineral system according to claim 1 for filling boreholes and/or for cementing anchors.

8. Use of the organomineral system according to claim 1 as a spray coating for building surfaces.

9. Use of the organomineral system according to claim 1 as a repair mortar for repairing defects.

## Revendications

1. Systèmes organo-minéraux obtenus par réaction d'un constituant polyisocyanate avec un constituant verre soluble, **caractérisés en ce que** le constituant verre soluble contient des composés silanes qui possèdent au moins deux groupes amino primaires et/ou secondaires.

2. Systèmes organo-minéraux selon la revendication 1, **caractérisés en ce que** le constituant verre soluble contient des silanols ou leurs composés précurseurs.

3. Systèmes organo-minéraux selon les revendications 1 et 2, **caractérisés en ce que** le constituant verre soluble contient du (3-(éthylènediamino)propyl)silanol ou du (3-(diéthylènetriamino)-propyl)silanol.

4. Système organo-minéral selon les revendications 1 à 3, **caractérisé en ce que** le constituant verre soluble contient du (3-(éthylènediamino)propyl)triméthoxysilane ou du (3-(diéthylènetriamino)propyl)triméthoxysilane comme composé précurseur.

5. Système organo-minéral selon les revendications 1 à 4, **caractérisé en ce que** le constituant verre soluble contient des composés silanes dans une quantité de 0,05 à 5 % en poids.

6. Procédé de préparation d'un système organo-minéral par réaction d'un constituant polyisocyanate avec un constituant verre soluble, **caractérisé en ce que** l'on ajoute des composés silanes au constituant verre soluble.

7. Utilisation du système organo-minéral selon la revendication 1 pour boucher des trous forés et/ou pour cimenter des éléments d'ancrage.

8. Utilisation du système organo-minéral selon la revendication 1 en tant que revêtement pulvérisé pour surfaces de bâtiments.

9. Utilisation du système organo-minéral selon la revendication 1 en tant que mortier destiné à la réparation de zones défectueuses.
